# EUROPEAN PATENT APPLICATION

(11) **EP 1 894 701 A1**
(43) Date of publication of application: **05.03.2008**
(21) Application number: 07114365.5
(22) Date of filing: 15.08.2007
(51) Int. Cl.: B29C 45/84, B29C 45/80, B29C 45/66

(54) **Mold clamping device of injection molding machine**

(30) Priority: 29.08.2006 JP 2006231705
(71) Applicant: Fanuc Ltd, Minamitsuru-gun, Yamanashi 401-0597 (JP)
(72) Inventor: Nishimura, Koichi, Susono-shi, Shizuoka 410-1115 (JP); Hashimoto, Nobuaki, Fujiyoshida-shi, Yamanashi 403-0005 (JP)
(74) Representative: Billington, Lawrence Emlyn

(57) **Abstract**

In a toggle-type clamping device that is driven by a belt (9) driven by a motor, it is desired to detect securely a break in the belt (9) using a simple and inexpensive construction. A dog (13) is mounted on a crosshead of a toggle mechanism, a proximity switch (14) is mounted on a rear platen, and arrival of the crosshead at a predetermined position is detected. A position detector is mounted on a motor that drives the toggle mechanism via a belt and a ball screw. When arrival of the crosshead at the predetermined position (a mold touch position or a position at which the mold is open a predetermined distance from the mold touch position) is detected by the position detector, if the dog (13) is not detected by the proximity switch (14), the clamping device outputs an alarm as an indication that an abnormality such as a break in the belt (9) has occurred. Simply by adding to a conventional toggle-type clamping device a simple and inexpensive detection unit such as the proximity switch (14), the dog (13), and the like, abnormalities such as belt breakage and the like can be securely detected.

## Description

### BACKGROUND OF THE INVENTION

### 1. Field of the Invention

The present invention relates to a clamping device of an injection molding machine, and more particularly to a mold clamping device for clamping a mold by driving a toggle mechanism by a motor through a belt.

### 2. Description of Related Art

In injection molding machines, when driving a toggle-type clamping mechanism with a motor, a method that transmits torque of the motor through a belt to the toggle mechanism of a clamping device to drive the clamping device is commonly employed. In addition, a method that detects a position of a movable-side mold driven by the clamping device by a rotation position of the motor that drives the clamping device is also common.

At the same time, because a large clamping force is required of the clamping device the force transmitted by the belt is also large, and therefore the belt sometimes breaks. A variety of methods have been proposed for detecting such belt breaks and preventing faulty operation of the injection molding machine.

For example, in a clamping device that transmits motor torque to a crosshead of a toggle mechanism of the clamping device with a timing belt, providing a first pulse generator that detects the rotation of the motor and a second pulse generator that detects movement of the crosshead, and determining that an abnormality has occurred when the difference in the number of pulses measured by the first and second pulse generators exceeds a predetermined range is known (see JP07-16901A).

In addition, mounting on a drive shaft driven by a motor (a first pulley) a first pulse generating means such as a rotary encoder that detects rotations of the drive shaft and having a second pulse generating means composed of a proximity switch that detects proximity of a dog provided on a second pulley driven by the drive shaft through a power transmission belt, providing count-speed converters that obtain the rotation speeds of each pulley from a first and a second pulse width counter that count the number of pulses from a clock pulse generator in a single cycle of pulses generated from the first pulse generator and the second pulse generator and from the counts of the first and second pulse width generators, comparing the rotation speeds of the first and second pulleys, and outputting a malfunction signal whenever the difference between the two speeds meets or exceeds a threshold value is known (see JP2003-174786A).

Further, providing one or more projections in a circumferential direction on a side of a driven pulley to which a motor transmits rotation via a driving pulley and a belt as well as providing a proximity switch that detects the projections and generates ON-OFF signals, and detecting an absence of ON-OFF signals from the proximity switch during motor drive as a belt break is known (see JP2003-74649A).

Further, in an injection molding machine that transmits torque of a motor to a toggle mechanism of a clamping device with a timing belt, storing the torque of the motor during normal operation and determining that there is a break in the timing belt when a torque detected by a torque detection means is smaller than the stored torque by a predetermined amount is known (see JP06-182845A).

However, as methods of detecting a break in the belt that transmits the torque of the motor to the toggle mechanism of the clamping device, of the methods described above the methods taught by JP07-16901A and JP2003-174786A require installation of first and second pulse generating means, thus expanding the scale of the means for detecting belt breakage.

Moreover, with the method of detecting the rotations of the driven-side pulley taught by JP2003-74649A, there is no guarantee that, through malfunction of the mechanism part, the crosshead of the toggle mechanism is actually moving even when the driven-side pulley is rotating, and thus cannot securely detect the abnormality of a break in the belt. Further, the method of identifying belt breakage by the torque taught by JP06-182845A requires measuring and storing the torque of the motor during normal operation, which requires a time-consuming operation.

### SUMMARY OF THE INVENTION

The present invention provides a mold clamping device of an injection molding machine capable of detecting a break in a belt simply and securely and preventing faulty operation of an injection molding machine.

A mold clamping device of the present invention comprises: a motor; a toggle mechanism having a crosshead; a transmission mechanism for transmitting an output of the motor to the toggle mechanism through a belt; a position detector for detecting a rotational position of the motor, so that a position of the crosshead of the toggle mechanism is determined based on the detected rotational position of the motor; a sensing unit for sensing an arrival of the crosshead of the toggle mechanism at a predetermined position; and abnormality determining means that determines an abnormality if an arrival of the crosshead at the predetermined position is not sensed by the sensing unit when the position of the crosshead determined based on the detected rotational position of the motor reaches the predetermined position.

The sensing unit may comprise a proximity switch and a dog. The predetermined position may be set to a mold touch position where mold halves touch with each other or to a position where the mold halves are opened by a predetermined distance from the mold touch position.

According to the injection molding machine clamping device having the construction described above, simply by adding to a conventional toggle-type clamping device a simple detection unit, abnormalities such as belt breakage and the like can be detected simply, inexpensively and securely.

### BRIEF DESCRIPTION OF THE DRAWINGS

FIG. 1 is a schematic diagram of a clamping device according to an embodiment of the present invention;
FIG. 2 is a flow chart illustrating an algorithm of a belt breakage detection process that a processor of a control device of the clamping device according to the embodiment of the present invention executes during opening and closing of a mold; and
FIG. 3 is a diagram illustrating a dog and a proximity switch of the clamping device according to the embodiment of the present invention.

### DETAILED DESCRIPTION

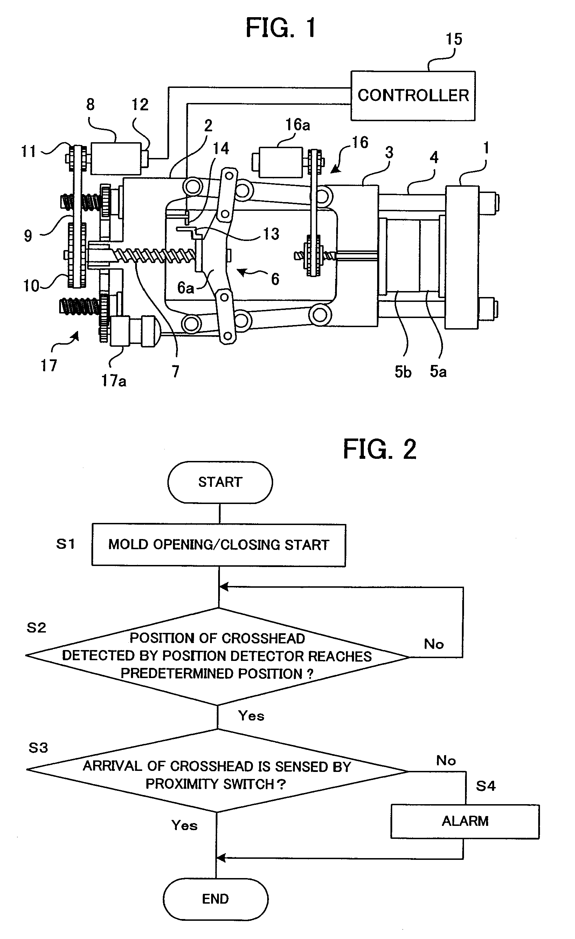

FIG. 1 is a schematic diagram of a clamping device according to an embodiment of the present invention. A stationary platen 1 and a rear platen 2 are coupled to each other by a plurality of tie bars 4. Between the stationary platen 1 and the rear platen 2 a movable platen 3 is disposed so as to be movable along the tie bars 4. In addition, a stationary mold half 5a is mounted on the stationary platen 1 and a movable mold 5half b is mounted on the movable platen 3.

Between the rear platen 2 and the movable platen 3 a toggle mechanism 6 is disposed. A ball nut provided on a crosshead 6a of the toggle mechanism 6 engages a ball screw 7 mounted on the rear platen 2 so as to be rotatable but unmovable in an axial direction. A belt 9 is suspended between a pulley 10 provided on the ball screw 7 and a pulley 11 provided on an output shaft of a clamping servomotor 8 used for clamping. The ball screw 7 is driven by the drive of the clamping servomotor 8 via the pulley 11, the belt 9, and the pulley 10, causing the crosshead 6a of the toggle mechanism 6 to advance and retreat (that is, to move laterally left and right in FIG. 1) and driving the toggle mechanism 6, which in turn moves the movable platen 3 toward and away from the stationary platen 1, opening/closing and clamping the two halves of the mold 5a, 5b. A position/speed detector 12 such as a pulse encoder or the like that detects a rotation position and a speed of the clamping servomotor 8 is mounted on the clamping servomotor 8, such that the position of the crosshead 6a and the position of the movable platen 3 (that is, the movable-side mold 5b) can be detected by feedback signals from the position/speed detector 12.

It should be noted that reference numeral 16 designates an eject mechanism provided on the movable platen 3 for pushing a molded product out of the interior of the mold, which works by driving an eject motor 16a during opening of the mold so as to push an eject pin into the interior of the mold, thus pushing the molded product out of the mold. In addition, reference numeral 17 designates a clamping force adjustment mechanism provided on the rear platen 2, which drives a clamping force adjustment motor 17a that rotates nuts that engage screws mounted on the tie bars 4 through a transmission mechanism so as to change the position of the rear platen 2 with respect to the tie bars 4 and thereby adjust the clamping force. The eject mechanism 16 and the clamping force adjustment mechanism 17 are not directly related to the present invention and detailed descriptions thereof are therefore omitted.

Reference numeral 15 designates a controller for controlling the injection molding machine, and as conventionally comprises a processor, memory units such as a ROM, a RAM, etc., an input/output interface, and a motor control circuit that controls the position and speed of the servomotors that drive the movable parts of the injection molding machine. The controller 15 controls the driving of the movable parts of the injection molding machine such as the clamping servomotor 8, the eject motor 16a, and the clamping force adjustment motor 17a described above. Further, the position/speed detector 12 mounted on the clamping servomotor 8 is connected to the controller 15 so that signals from the position/speed detector 12 are fed back to the controller 15.

The construction described above is the same construction as that of the conventional toggle-type clamping device, and does not differ from the related art. The distinctive feature of the present invention is the addition of a detection unit to the toggle mechanism 6 side of this type of toggle-type clamping device that detects the arrival of the crosshead 6a of the toggle mechanism 6 at a predetermined position. Specifically, in the present embodiment, as the detection unit, a dog 13 is provided on the crosshead 6a and a proximity switch 14 that detects the dog 13 when the dog 13 reaches a predetermined position is provided on the rear platen 2. The proximity switch 14 is also connected to the controller 15.

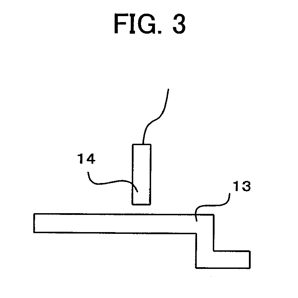

FIG. 3 is a diagram illustrating the relation between the dog 13 and the proximity switch 14. The position of the dog 13 or the mounting position of the proximity switch 14 are adjusted so that, when the crosshead 6a reaches a predetermined position, the dog 13 mounted on the crosshead 6a of the toggle mechanism 6 is sensed by the proximity switch 14. The predetermined position at which the proximity switch 14 sensed the dog 13 is set so as to be either a mold touch position where two halves of the mold 5a, 5b contact each other, or a position where the mold halves are opened by a predetermined distance from the mold touch position.

FIG. 2 is a flow chart showing an algorithm of a belt breakage detection process to be executed by a processor of the controller 15 during opening and closing of the mold.

When an opening or closing movement of the mold begins (Step S1), the processor of the controller 15 determines whether or not the crosshead 6a has reached the set predetermined position based on the position feedback signals from the position/speed detector 12 mounted on the clamping servomotor 8 (Step S2). When the processor determines that the crosshead 6a has reached the predetermined position based on the position feedback signals, it then determines whether or not a signal indicating sensing of the dog 13 has been inputted from the proximity switch 14 (Step S3). If no abnormality such as breakage of the belt 9 has occurred, the proximity switch 14 senses the dog 13 when the position of the crosshead 6a determined based on the detection by the position/speed detector 12 has reached the predetermined position, and therefore the opening or closing movement of the mold continues as is.

By contrast, when it is determined that the proximity switch 14 has not sensed the dog 13 in Step S3, the processor outputs an alarm and stops the movement of the mold (Step S4).

Thus, as described above, simply by adding a simple mechanism comprised of the proximity switch 14 and the dog 13 to the conventional toggle-type clamping device, abnormalities such as a break in the belt 9 and the like can be detected simply, inexpensively and securely by utilizing the position/speed detector 12 or the like mounted on the clamping servomotor 8 of the conventional toggle-type clamping device.

It should be noted that although in the above-described embodiment the sensing unit that senses the arrival of the crosshead 6a at the predetermined position is comprised of the dog 13 and the proximity switch 14, another equally simple sensing unit such as a limit switch may be used instead.

## Claims

1. A mold clamping device of an injection molding machine, comprising:
a motor;
a toggle mechanism having a crosshead;
a transmission mechanism for transmitting an output of said motor to said toggle mechanism through a belt;
a position detector for detecting a rotational position of said motor, so that a position of the crosshead of said toggle mechanism is determined based on the detected rotational position of the motor;
a sensing unit for sensing an arrival of the crosshead of the toggle mechanism at a predetermined position; and
abnormality determining means that determines an abnormality if an arrival of the crosshead at the predetermined position is not sensed by said sensing unit when the position of the crosshead determined based on the detected rotational position of the motor reaches the predetermined position.

2. A mold clamping device of an injection molding machine according to claim 1, wherein said sensing unit comprises a proximity switch and a dog.

3. A mold clamping device of an injection molding machine according to claim 1, wherein the predetermined position is set to a mold touch position where mold halves touch with each other or to a position where the mold halves are opened from the mold touch position by a predetermined distance.
